# EUROPEAN PATENT APPLICATION

(11) **EP 4 418 432 A1**
(43) Date of publication of application: **21.08.2024**
(21) Application number: 22928110.0
(22) Date of filing: 30.06.2022
(51) Int. Cl.: H01M 50/342, H01M 50/10, H01M 50/244

(54) **BATTERY CELL, BATTERY, AND ELECTRICAL DEVICE**

(30) Priority: 28.02.2022 WO PCT/CN2022/078375
(71) Applicant: Contemporary Amperex Technology Co., Limited, Ningde, Fujian 352100 (CN)
(72) Inventor: LEI, Yuyong, Ningde, Fujian 352100 (CN); GUO, Zhijun, Ningde, Fujian 352100 (CN); WANG, Peng, Ningde, Fujian 352100 (CN)
(74) Representative: Holt, Lucy Rose
(86) International application number: PCT/CN2022/102613
(87) International publication number: WO 2023/159840

(57) **Abstract**

The present application provides a battery cell, a battery, and an electrical device. The battery cell comprises a housing and a pressure relief mechanism; the housing is provided with a first wall; the first wall is provided with a through hole; the pressure relief mechanism is provided on the first wall; and the pressure relief mechanism is at least partially located in the through hole. According to the battery cell provided by embodiments of the present application, the first wall of the housing is provided with the through hole, and the pressure relief mechanism is at least partially located in the through hole, so as to improve the support force and connection strength of the housing to the pressure relief mechanism, reduce the risk of affecting the normal working of the pressure relief mechanism due to insufficient fixing strength of the pressure relief mechanism, and improve the safety performance of the battery cell.

## Description

### CROSS REFERENCE TO RELATED APPLICATION

This application claims priority to International Patent Application No. PCT/CN2022/078375, titled "Battery Cell, Battery and Electricity-Consuming Apparatus" and filed on February 28, 2022, which is hereby incorporated by reference in its entirety.

### TECHNICAL FIELD

The present application relates to the technical field of batteries, and in particular to a battery cell, a battery and an electricity-consuming apparatus.

### BACKGROUND

Batteries are widely used in electricity-consuming apparatus, such as mobile phones, laptops, electric vehicles, electric cars, electric planes, electric ships, electric toy cars, electric toy ships, electric toy planes and electric tools.

In the development of the battery cell technology, in addition to improving the usage performance of a battery cell, safety issues also need to be considered. Therefore, how to improve the safety performance of battery cells is an urgent problem to be solved in the battery cell technology.

### SUMMARY

Embodiments of the present application provide a battery cell, a battery and an electricity-consuming apparatus, so that the safety performance of the battery cell can be improved.

In a first aspect, embodiments of the present application provide a battery cell including a casing and a pressure relief mechanism. The casing includes a first wall provided with a through hole; the pressure relief mechanism is arranged on the first wall, and at least a portion of the pressure relief mechanism is located in the through hole.

In the battery cell provided by the embodiments of the present application, by arranging the through hole in the first wall of the casing and placing at least a portion of the pressure relief mechanism in the through hole, it is beneficial to improving the support force and connecting strength of the casing to the pressure relief mechanism, reducing the risk of affecting the normal operation of the pressure relief mechanism due to the insufficient fixed strength, and improving the safety performance of the battery cell.

In some embodiments, the pressure relief mechanism is completely accommodated in the through hole. Thus, it is further beneficial to providing the effective protection for the pressure relief mechanism, reducing the risk of affecting the normal operation of the pressure relief mechanism due to other parts inside or outside an electrode assembly exerting the pressure on the pressure relief mechanism, maintaining the stability of the actuating pressure of the pressure relief mechanism, and further improving the safety performance of the battery cell.

In some embodiments, the through hole includes a first hole segment, a second hole segment and a first connecting face connecting the first hole segment with the second hole segment; a projection area of the first hole segment is smaller than a projection area of the second hole segment in a thickness direction of the first wall, the first hole segment is located at a side of the second hole segment close to an interior of the casing, and an inner wall of the second hole segment is configured to fit with a peripheral side face of the pressure relief mechanism. Thus, it can reduce the risk of the electrode assembly exerting the pressure on the pressure relief mechanism due to the electrode assembly contacting with the pressure relief mechanism to be impacted or vibrated, and it is beneficial to reducing the risk of the electrode assembly affecting the normal operation of the pressure relief mechanism.

In some embodiments, in the thickness direction, a size T1 of the first hole segment satisfies: T1≥0.3mm. Thus, it is beneficial to ensuring a sufficient distance between the pressure relief mechanism and the electrode assembly, so that the pressure relief mechanism can still be spaced apart from the electrode assembly even if the first wall is deformed. Further, it can reduce the risk of the electrode assembly exerting the pressure on the pressure relief mechanism due to the electrode assembly contacting with the pressure relief mechanism when the electrode assembly expands or the battery cell is impacted or vibrated.

In some embodiments, in the thickness direction, a size of the first hole segment is T1, and a size of the second hole segment is T2, and T1+T2≥0.5mm. Thus, it is beneficial to achieving the normal processing of the first hole segment and achieving the pressure relief mechanism completely positioned in the second hole segment, so as to further reduce the risk of the external parts exerting pressure on the pressure relief mechanism to affect the normal operation of the pressure relief mechanism.

In some embodiments, T1+T2≤3mm. Thus, on the basis of ensuring that both the first hole segment and second hole segment have sufficient sizes, it is beneficial to reducing a thickness of the first wall as much as possible, so as to achieve the lightweight of the battery cell and improve the volume energy density of the battery cell.

In some embodiments, the pressure relief mechanism includes a body and a connecting part, the connecting part is arranged around the body and abuts against the first connecting face, the body includes a basal region and a weak region, and a rupture stress of the weak region is smaller than a rupture stress of the basal region. Thus, the specific size of the rupture stress in the weak region can be set as needed to achieve the opening or rupture of the weak region when the internal pressure of the battery cell reaches the threshold, so as to discharge the gas in the battery cell timely. In addition, the specific shape of the weak region and the shape of a gas-exhausting channel when the pressure relief mechanism is opened can be set to discharge the gas in the battery cell quickly.

In some embodiments, a projection of the weak region in the thickness direction is located within the first hole segment, and the weak region is spaced apart from an inner wall of the second hole segment in a direction perpendicular to the thickness direction. Thus, it is beneficial to the normal rupture or burst of the weak region, and it is beneficial to reducing the risk of the adverse effect of the inner wall of the second hole segment on the normal rupture of the weak region.

In some embodiments, in a first direction, a size of the connecting part is S1, a width of the first connecting face is D1, S1≥D1, and the first direction is a direction passing through a geometric center of the pressure relief mechanism and perpendicular to the thickness direction. Thus, it is beneficial to reducing the risk of the adverse effect of the connecting part on the normal rupture or burst of the pressure relief mechanism, further ensuring the normal actuation and the normal pressure relief of the pressure relief mechanism, and improving the operation safety of the battery cell.

In some embodiments, the through hole further includes a third hole segment and a second connecting face connecting the third hole segment with the second hole segment; in the thickness direction, a projection area of the third hole segment is larger than a projection area of the second hole segment; in the first direction, a width D2 of the second connecting face satisfies: D2≥0.5mm, and the first direction is a direction passing through a geometric center of the pressure relief mechanism and perpendicular to the thickness direction. Thus, a sufficient space for the pressure relief and the welding mark after the first wall welded can be reserved. It is beneficial to ensuring the normal welding operation of the pressure relief mechanism.

In some embodiments, D2≤1.2mm. Thus, on the premise of ensuring the normal welding process of the pressure relief mechanism, the width of the second connecting face in the first direction is reduced as much as possible, and the space of the first wall occupied by the pressure relief mechanism is reduced, so that it is beneficial to reducing the size of the first wall, thereby improving the volume energy density of the battery cell.

In some embodiments, the battery cell further includes a protective member, the protective member is connected to the first wall and arranged at a side of the pressure relief mechanism close to an exterior of the casing, and in the thickness direction, the minimum distance h between the protective member and the pressure relief mechanism satisfies: h≥ 0.2mm. By arranging the protective member, the pressure relief mechanism can be protected to reduce the scratch and other injuries caused by the foreign objects outside the battery cell. The minimum distance h between the protective member and the pressure relief mechanism satisfies the above relationship, so that it is beneficial to achieving the normal actuation of the pressure relief mechanism when the pressure in the battery cell reaches the threshold.

In some embodiments, the through hole includes a third hole segment, a fourth hole segment and a third connecting face connecting the third hole segment and the fourth hole segment, the third hole segment is arranged between the second hole segment and the fourth hole segment, and a projection area of the third hole segment is smaller than a projection area of the fourth hole segment in the thickness direction. The protective member is connected to the third connecting face, and the maximum size of the protective member is smaller than or equal to a size of the fourth hole segment in the thickness direction. Thus, the risk of the external member scratching the protective member to cause the protective member to fall off can be reduced, so that it is beneficial to improving the stability of the connection between the protective member and the first wall.

In some embodiments, in a direction perpendicular to the thickness direction, a distance h1 between an outer edge of the protective member and an inner wall of the third hole segment satisfies: h1 ≥0.5mm. Thus, it is beneficial to improving the reliability of the connection between the protective member and the third connecting face.

In some embodiments, in a first direction, a distance w between the outer edge of the protective member and the inner wall of the fourth hole segment is 0.2mm≤w≤3mm, in which the first direction is a direction passing through a geometric center of the pressure relief mechanism and perpendicular to the thickness direction. Thus, it can reduce the risk of the interference between the protective member and the first wall, and facilitate the integration of other members on the first wall.

In some embodiments, the casing includes a casing body and an end cover, the casing body is provided with an opening, and the end cover is configured to cover the opening. The pressure relief mechanism is arranged on the casing body, or the pressure relief mechanism is arranged on the end cover. According to actual needs, the specific position of the pressure relief mechanism can be flexibly arranged, so as to reserve the sufficient space for the integration of other related structures of the battery cell.

In some embodiments, the pressure relief mechanism is arranged on the casing body including the first wall, a second wall and two third walls, the first wall and the second wall are arranged opposite to each other, the two third walls are arranged opposite to each other, and each of the third walls connects the first wall and the second wall. On the premise of ensuring the normal operation of the pressure relief mechanism, the position of the pressure relief mechanism can be arranged reasonably according to the spatial layout of various parts in the battery cell.

In some embodiments, a surface area of the first wall is smaller than a surface area of the third wall. Thus, during the process of forming the battery or a battery module from the battery cell, a side surface of the battery cell with a larger area, such as a surface corresponding to the third wall, can be attached to the third wall, so as to improve the space utilization rate of the interior of the battery and the energy density of the battery.

In some embodiments, the casing body is provided with two openings opposite to each other, two end covers are provided, and the two end covers cover the two openings respectively. Thus, the assembly process of the battery cell can be more convenient and quick.

In a second aspect, embodiments of the present application provide a battery, including the battery cell according to any one of the embodiments as described above.

The battery provided by the embodiments of the present application has the same technical effect due to using the battery cell provided by any one of the embodiments as described above, and the technical effect will not be repeated here.

In a third aspect, embodiments of the present application provide an electricity-consuming apparatus, including the battery according to the above embodiments, and the battery is configured to supply an electric power.

The electricity-consuming apparatus provided by the embodiments of the present application has the same technical effect due to using the battery provided by the embodiments as described above, and the technical effect will not be repeated here.

The battery cell, the battery and the electricity-consuming apparatus are provided by the present application. By arranging the through hole in the first wall of the casing and placing at least a portion of the pressure relief mechanism in the through hole, it is beneficial to improving the support force and connecting strength of the casing to the pressure relief mechanism, reducing the risk of affecting the normal operation of the pressure relief mechanism due to the insufficient support force, and improving the safety performance of the battery cell.

### BRIEF DESCRIPTION OF THE DRAWINGS

In order to more clearly illustrate the technical solutions of the embodiments of the present application, the drawings to be used in the description of the embodiments of the present application will be described briefly below. It will be apparent that the drawings in the following description are merely some embodiments of the present application. For those skilled in the art, other drawings can also be obtained according to these drawings without the inventive labor.
Fig. 1 shows a structural schematic view of a vehicle according to an embodiment of the present application;
Fig. 2 shows a structural schematic view of a battery according to an embodiment of the present application;
Fig. 3 shows a structural schematic view of a battery module in a battery according to an embodiment of the present application;
Fig. 4 shows an exploded structural schematic view of a battery cell according to an embodiment of the present application;
Fig. 5 shows an exploded structural schematic view of a battery cell according to another embodiment of the present application;
Fig. 6 shows a front view of a battery cell according to an embodiment of the present application;
Fig. 7 shows a structural schematic cross-sectional view of the battery cell omitting an electrode assembly in line A-A of Fig. 6;
Fig. 8 shows a partial enlarged view at part B of the Fig. 7;
Fig. 9 shows another partial enlarged view at part B of the Fig. 7; and
Fig. 10 shows another partial enlarged view at part B of the Fig. 7.

In the drawings, the drawings are not drawn to actual scale.

### Description of reference numerals:

1-vehicle; 1a-motor; 1b-controller;
10-battery; 11-first housing body; 12-second housing body;
20-battery module;
30-battery cell;
31-casing; 31a-accommodating cavity; 311-casing body; 311a-opening; 3111-second wall; 3112-third wall; 312-end cover;
32-first wall; 32a-through hole; 321a-first hole segment; 322a-second hole segment; 323a-first connecting face; 324a-third hole segment; 325a-second connecting face; 326a-fourth hole segment; 327a-third connecting face;
33-electrode assembly;
34-pressure relief mechanism; 341-body; 341a-basal region; 341b-weak region; 342-connecting part;
35-protective member;
X-thickness direction; Y-first direction.

### DETAILED DESCRIPTION

The embodiments of the present application will be described in further detail below conjunction with the drawings and the embodiments. The detailed description and drawings of the following embodiments are used to exemplarily illustrate the principle of the present application, but cannot be used to limit the scope of the present application, in other words, the present application is not limited to the described embodiments.

In the description of the present application, it should be noted that, unless otherwise specified, "plurality" means more than two; the terms "upper", "lower", "left", "right", "inner", "outer", etc. indicate the orientation or positional relationship only for the convenience of describing the present application and simplifying the description, rather than indicating or implying that the device or the element referred to must have a specific orientation, be configured and operated in a specific orientation, and therefore cannot be understood as a limitation of the present application. In addition, the terms "first", "second" and the like are only used for descriptive purposes, and cannot be understood as indicating or implying relative importance. The term "perpendicular" does not mean that strictly perpendicular is required, but allows the allowable range of error. The term "parallel" does not mean that strictly parallel is required, but allows the allowable range of error.

The "embodiments" referred in the present application means that specific features, structures or characteristics described in conjunction with the embodiments may be included in at least one embodiment of the present application. This word appeared in various places in the description does not necessarily refer to the same embodiment, nor is it an independent or alternative embodiment mutually exclusive with other embodiments. It is understood explicitly and implicitly by those skilled in the art that the embodiments described in the present application can be combined with other embodiments.

In the description of the present application, it should also be noted that, unless otherwise clearly specified and limited, the terms "mount", "communicate" and "connect" should be understood in a broad sense, for example, it can be a fixed connection, a detachable connection or an integral connection, it can be a direct connection, or it can be connected indirectly through an intermediary. For those of ordinary skill in the art, the specific meaning of the above-mentioned terms in the present application can be understood according to specific situations.

In the present application, a battery cell may include a lithium-ion secondary battery cell, a lithium-ion primary battery cell, a lithium-sulfur battery cell, a sodium lithium ion battery cell, a sodium ion battery cell, a magnesium ion battery cell and the like, which is not limited in the embodiments of the present application. The battery cell can be in a shape of a cylinder, a flatten body, a cuboid or other shapes, which is not limited in the embodiments of the present application. Generally, the battery cell can be divided into three types in packaging: a cylindrical cell, a cuboid rectangle battery cell and soft pack battery cell, which is not limited in the embodiments of the present application.

The battery mentioned in the embodiments of the present application refers to a single physical module that includes one or more battery cells to provide higher voltage and capacity. For example, the battery mentioned in the present application may include a battery module, a battery pack or the like. The battery generally includes a housing for packaging one or more battery cells. The housing can prevent liquid or other foreign objects from affecting charging or discharging of the battery cell.

The battery cell includes an electrode assembly and an electrolyte, and the electrode assembly includes a positive electrode sheet, a negative electrode sheet and a separator. The battery cell mainly relies on the movement of metal ions between the positive electrode sheet and the negative electrode sheet to work. The positive electrode sheet includes a positive electrode current collector and a positive electrode active material layer. The positive electrode active material layer is applied on a surface of the positive electrode current collector. A current collector uncoated with the positive electrode active material layer protrudes from the current collector coated with the positive electrode active material layer. The current collectors uncoated with the positive electrode active material layer are stacked as a positive electrode tab. Taking a lithium ion battery as an example, the material of the positive electrode current collector may be aluminum, and the positive electrode active material may be lithium cobaltate, lithium iron phosphate, ternary lithium, lithium manganite or the like. The negative electrode sheet includes a negative electrode current collector and a negative electrode active material layer. The negative electrode active material layer is applied on a surface of the negative electrode current collector. A current collector uncoated with the negative electrode active material layer protrudes from the current collector coated with the negative electrode active material layer. The current collectors uncoated with the negative electrode active material layer are stacked as a negative electrode tab. The material of the negative electrode current collector may be copper, and the negative electrode active material may be carbon, silicon or the like. The material of the separator may be PP (polypropylene), PE (polyethylene) or the like. In addition, the electrode assembly may be a winding-type structure or a stack-type structure, which is not limited in the embodiments of the present application.

In the battery cell, there are multiple cycles of charging and discharging, side reactions and continuous generation of gas, resulting in a certain amount of air pressure in the battery cell. As the pressure increases, the gas between the electrode sheets cannot be eliminated in time, thereby affecting the insertion and removal of lithium ions and leading to the risk of the lithium evolution. Alternatively, when a short circuit or even thermal runaway occurs in the battery cell, the pressure in the battery cell will continue to increase. In order to ensure the safety of the battery cell, a pressure relief mechanism is generally arranged on a casing body of the battery cell. The gas generated in the battery cell is discharged and the pressure is released through the pressure relief mechanism to ensure the safety of the battery cell.

After the inventors discover the issue of low safety in the operation of battery cell, they conduct a systematic analysis and research on the structure and working process of the battery cell. The results show that a casing of the battery cell has no sufficient support force for the pressure relief mechanism. During the operation of the battery cell, the pressure relief mechanism may move and loosen relative to the casing, so that it can affect the normal operation of the pressure relief mechanism. In this way, after the gas pressure in the battery cell reaches the predetermined pressure of the pressure relief mechanism, the pressure relief mechanism of the battery cell fails to be activated yet, or when the pressure inside he battery cell does not reach the predetermined pressure, the pressure relief mechanism has already been activated, so that it may pose a certain safety hazard to the battery cell.

Based on the above issues discovered by the inventors, the inventors have improved the structure of the battery cell. The technical solution described in embodiments of the present application is applicable to a battery cell, a battery including the battery cell and an electricity-consuming apparatus using the battery.

The embodiments of the present application provide the battery cell including a casing and a pressure relief mechanism. The casing includes a first wall and the first wall is provided with a through hole. The pressure relief mechanism is arranged on the first wall, and at least a portion of the pressure relief mechanism is located in the through hole.

In the battery cell provided by the embodiments of the present application, the through hole is provided in the first wall of the casing and at least a portion of the pressure relief mechanism is placed in the through hole, so that it is beneficial to improving the support force and connecting strength of the casing to the pressure relief mechanism, reducing the risk of affecting the normal operation of the pressure relief mechanism due to the insufficient fixed strength, and improving the safety performance of the battery cell.

The electricity-consuming apparatus may be a vehicle, a mobile phone, a portable device, a notebook computer, a ship, a spacecraft, an electric toy, an electric tool or the like. The vehicle may be a fuel car, a gas car or a new energy car, and the new energy car can be a pure electric car, a hybrid car, a range-extended car or the like; the spacecraft may include an airplane, a rocket, a space shuttle, a space ship or the like; the electric toy may include a fixed-type or mobile-type electric toy, such as a game player, an electric car toy, an electric ship toy, an electric airplane toy or the like; the power tool may include a metal cutting power tool, a grinding power tool, an assembly power tool and a railway power tools, such as an electric drill, an electric grinder, an electric wrench, an electric screwdriver, an electric hammer, an impact drill, a concrete vibrator, an electric planers or the like. Embodiments of the present application do not impose specific limitation to the above-mentioned electricity-consuming device.

For the convenience of explanation, in the following embodiments a vehicle is taken as an example of the electricity-consuming apparatus as an example for illustration.

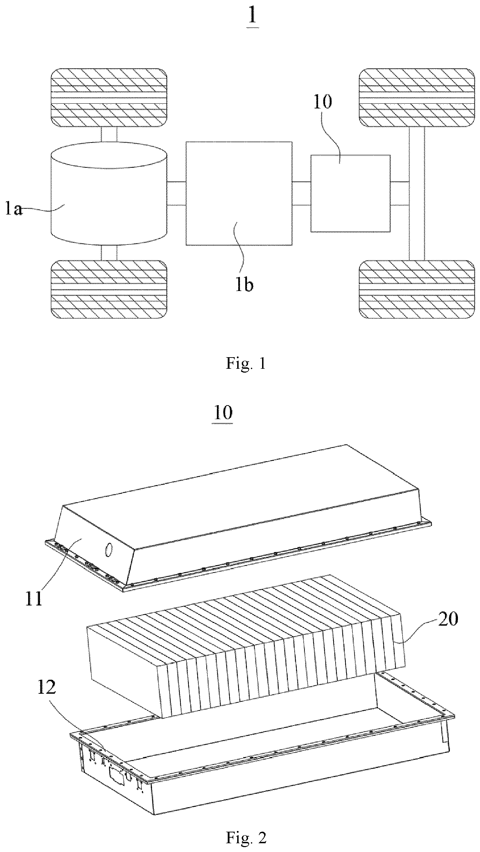

As shown in Fig. 1, a battery 10 may be arranged inside the vehicle 1, and the battery 10 may be arranged in the bottom, the front or the back of the vehicle 1. The battery 10 can be used to supply power to the vehicle 1, for example, the battery 10 can be used as an operating power source of the vehicle 1.

The vehicle 1 may further include a controller 1b and a motor 1a. The controller 1b can be used to control the battery 10 to supply power to the motor 1a, for example, for satisfying the work electricity needs of the vehicle 1 during starting, navigating and driving.

In some embodiments of the present application, the battery 10 can not only serve as an operating power source for the vehicle 1, but also as a driving power source for the vehicle 1, so as to replace or partially replace the fuel or the natural gas and provide the driving power for the vehicle 1.

As shown in Fig. 2, the battery 10 includes a battery cell (not shown in Fig. 2). The battery 10 may further include a housing for accommodating the battery cell.

The housing is used to accommodate the battery cell, and the housing can be of various structural forms. In some embodiments, the housing may include a first housing body 11 and a second housing body 12. The first housing body 11 and the second housing body 12 cover each other. The first housing body 11 and the second housing body 12 jointly define an accommodating space for accommodating the battery cell. The second housing body 12 may be a hollow structure having an opening at an end, and the first housing body 11 may be a plate-like structure. The first housing body 11 is covered with an opening side of the second housing body 12 to form the housing having the accommodating space. Or each of the first housing body 11 and the second housing body 12 may be a hollow structure having an opening on a side. The side of the first housing body 11 with the opening is covered with the side of the second housing body 12 with the opening to form the housing having the accommodation space. Of course, the first housing body 11 and the second housing body 12 can be in various shapes, such as a cylinder and a rectangular parallelepiped.

In order to improve the sealing performance after the first housing body 11 is connected with the second housing body 12, a sealing member, such as a sealant and a sealing ring, may be arranged between the first housing body 11 and the second housing body 12.

It can be assumed that the first housing body 11 is covered with the second housing body 12, the first housing body 11 can be called an upper housing cover, and the second housing body 12 can be called a lower housing cover.

In the battery 10, there may be one or more battery cells. If there are a plurality of battery cells, the plurality of battery cells can be connected in series, in parallel or in hybrid. The hybrid connection means that the plurality of battery cells are connected in series and parallel in combination. The plurality of battery cells can be directly connected in series, in parallel or in hybrid together, and then a whole composed of the plurality of battery cells can be accommodated in the housing. Or the plurality of battery cells can be connected in series, parallel or hybrid to form the battery module 20. A plurality of battery modules 20 are connected in series, in parallel or in hybrid to form a whole and are accommodated in the housing.

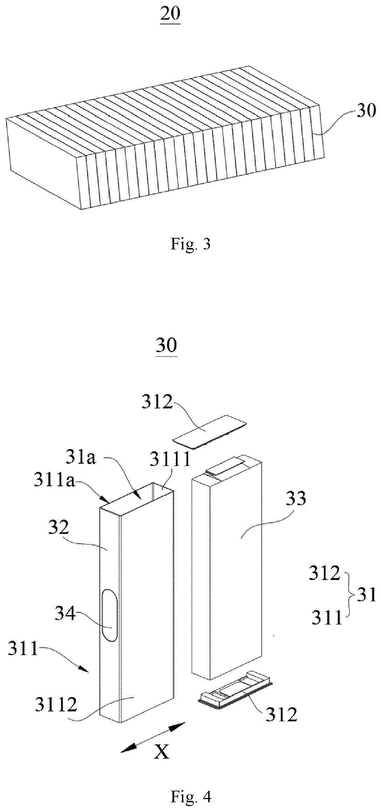

In some embodiments, as shown in Fig. 3, Fig. 3 is a structural schematic view of a battery module 20 shown in Fig. 2. In the battery module 20, the battery module 20 has a plurality of battery cells 30. The plurality of battery cells 30 are connected in series, in parallel or in hybrid firstly to form the battery module 20. The plurality of battery modules 20 are connected in series, in parallel or in hybrid to form a whole and are accommodated in the housing.

In some embodiments, the plurality of battery cells 30 in the battery module 20 can be electrically connected through a busbar to realize the parallel connection, the series connection or the hybrid connection of the plurality of battery cells 30 in the battery module 20.

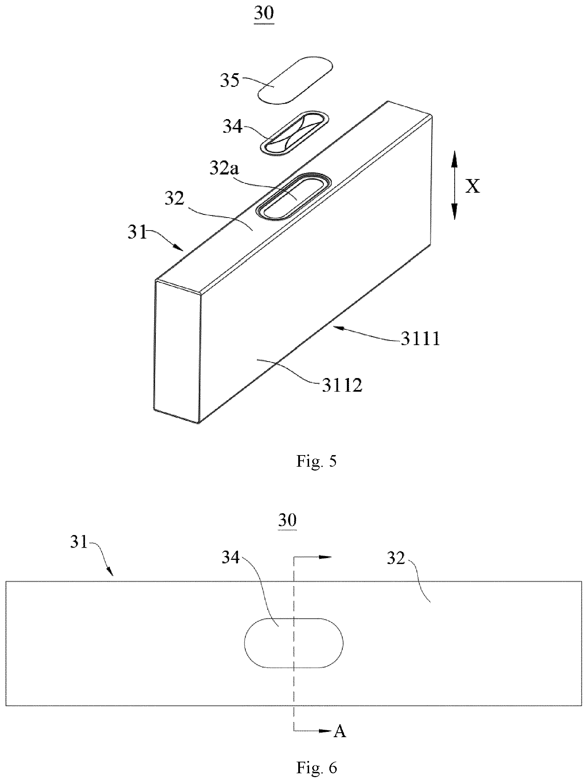

Fig. 4 and Fig. 5 show exploded structural schematic views of different battery cells 30 provided by the embodiments of the present application respectively.

As shown in Fig. 4 and Fig. 5, the battery cell 30 provided by the embodiments of the present application includes a casing 31 and a pressure relief mechanism 34. The casing 31 includes a first wall 32, and the first wall 32 is provided with a through hole 32a. The pressure relief mechanism 34 is arranged on the first wall 32, and at least a portion of the pressure relief mechanism 34 is located in the through hole 32a.

Optionally, the battery cell 30 further includes an electrode assembly 33. The casing 31 is provided with an accommodating cavity 31a, and the electrode assembly 33 is accommodated in the accommodating cavity 31a.

Optionally, the casing 31 may include a casing body 311 and an end cover 312. The casing body 311 is a hollow structure with an opening on a side or openings on a plurality of sides (including two sides). The end cover 312 covers the opening 311a of the casing body 311 and forms a sealing connection to form a sealing space for accommodating the electrode assembly 33 and the electrolyte.

When the battery cell 30 is assembled, the electrode assembly 33 can be placed into the casing body 311 firstly, then the end cover 312 covers the opening 311a of the casing body 311, and then the electrolyte is injected into the casing body 311 via an electrolyte injection port on the end cover 312.

Optionally, the casing 31 may also contain the electrolyte, such as electrolyte solution. The casing 31 may have various structural forms.

The casing body 311 can be in various shapes, such as cylinder and cuboid. The shape of the casing body 311 can be determined according to the specific shape of the electrode assembly 33. For example, if the electrode assembly 33 has a cylindrical structure, the casing body 311 can be a cylindrical structure. If the electrode assembly 33 has a cuboid structure, the casing body 311 may be a cuboid structure. In Fig. 4, exemplarily, each of the casing body 311 and the electrode assembly 33 is the cuboid structure.

The casing body 311 can be made of a variety of materials, such as copper, iron, aluminum, stainless steel and aluminum alloy, which is not particularly limited in the embodiment of the present application.

There may be one or more electrode assemblies 33 accommodated in the casing body 311. Exemplarily, in Fig. 4, there is one electrode assembly 33 accommodated in the casing body 311.

Optionally, the electrode assembly 33 further includes a positive electrode sheet, a negative electrode sheet and a separator. The electrode assembly 33 may be a winding-type structure formed by winding the positive electrode sheet, the separator and the negative electrode sheet. Or the electrode assembly 33 may be a stack-type structure formed by a stacked arrangement of the positive electrode sheet, the separator and the negative electrode sheet.

Tabs in the electrode assembly 33 are classified as a positive electrode tab and a negative electrode tab. The positive electrode tab may be a portion of the positive electrode current collector that is not coated with a positive electrode active material layer. The negative electrode tab may be a portion of the negative electrode current collector that is not coated with the negative electrode active material layer.

The pressure relief mechanism 34 is arranged on the first wall 32 of the casing 31 and can be activated when the gas pressure inside the casing 31 reaches the threshold to discharge the gas to an exterior of the casing 31. The pressure relief mechanism 34 can be an burst-proof valve or the like. It can burst or open to discharge the gas to the exterior of the casing 31 when the pressure reaches the threshold.

The pressure relief mechanism 34 and the first wall 32 of the casing 31 may be of an integrated structure, or they may be separately processed and then connected to each other as an integrated structure. For example, in the embodiments where the pressure relief mechanism 34 and the first wall 32 of the casing 31 are provided separately, they may be connected to each other by welding, bonding, clamping or the like.

The first wall 32 may be a flat plane on both sides in a thickness direction X, or may have a convex boss on either side in the thickness direction X. The through hole 32a can be located in a portion of the first wall 32 having the convex boss, that is, the through hole 32a is provided to penetrate through the convex boss.

Optionally, the first wall 32 may be the end cover 312 or a portion of the end cover 312, or the first wall 32 may be a portion of the casing body 311. Exemplarily, the first wall 32 is a portion of a side wall of the casing body 311.

Optionally, the first wall 32 may be a side wall of the casing body 311 with a smaller area. Thus, after the battery cell 30 is assembled into the battery 10, the first wall 32 may be arranged toward a bottom of the housing of the battery 10, or the first wall 32 may be arranged toward a top of the housing of the battery 10, which is not limited here. Fig. 3 shows an embodiment in which the first wall 32 of the battery module 20 is the side wall of the casing body 311 with a smaller surface area, and the first wall 32 is arranged toward the bottom of the housing.

Optionally, a axial direction of the through hole 32a may be parallel to the thickness direction X of the first wall 32, or the axial direction of the through hole 32a may be inclined relative to the thickness direction, and an angle between the two is an acute angle.

Optionally, the through hole 32a may be cylindrical or elliptical, or the through hole 32a may be a waist-shaped hole or other irregular shape.

Optionally, the pressure relief mechanism 34 can be completely located in the through hole 32a, or can be partially located in the through hole 32a, which can be selected as needed, and is not limited here.

In the battery cell 30 provided by the embodiments of the present application, the first wall 32 of the casing 31 is provided with the through hole 32a, and at least a portion of the pressure relief mechanism 34 is located in the through hole 32a, so that it is beneficial to improving the support force and connecting strength of the casing 31 to the pressure relief mechanism 34, reducing the risk of affecting the normal operation of the pressure relief mechanism 34 due to the insufficient fixed strength, and improving the safety performance of the battery cell 30.

In some embodiments, the pressure relief mechanism 34 is completely accommodated in the through hole 32a.

The pressure relief mechanism 34 is completely accommodated in the through hole 32a, so no part of the pressure relief mechanism 34 will protrude from any one of two opposite surfaces of the first wall 32 in the thickness direction X. In other words, an orthographic projection of the pressure relief mechanism 34 in a direction perpendicular to the thickness direction X is located within an orthographic projection of the first wall 32 in a direction perpendicular to the thickness direction X.

In the embodiments in which a surface of the first wall 32 has a convex part, the through hole 32a is provided to penetrate through the convex part, and the pressure relief mechanism is completely accommodated in the through hole 32a.

Optionally, outer surfaces on two sides of the pressure relief mechanism 34 that are opposite to each other in the thickness direction X can be flush with outer surfaces on two sides of the first wall 32 that are opposite to each other in the thickness direction X. Alternatively, the two are spaced apart from each other, and the outer surfaces of the pressure relief mechanism 34 that are opposite to each other in the thickness direction X is located in the through hole 32a.

It can be understood that the pressure relief mechanism 34 is arranged to be completely accommodated in the through hole 32a, so that it is further beneficial to providing the effective protection for the pressure relief mechanism 34, reducing the risk of affecting the normal operation of the pressure relief mechanism 34 due to the electrode assembly 33 at the interior or other parts at the exterior exerting the pressure on the pressure relief mechanism 34, maintaining the stability of the actuating pressure of the pressure relief mechanism 34, and further improving the safety performance of the battery cell 30. In addition, the pressure relief mechanism 34 is completely accommodated in the through hole 32a, so that the space in the battery cell 30, outside the battery cell 30 or inside the battery 10 occupied by the pressure relief mechanism 34 can be reduced, and it is beneficial to improving the energy density of the battery 10.

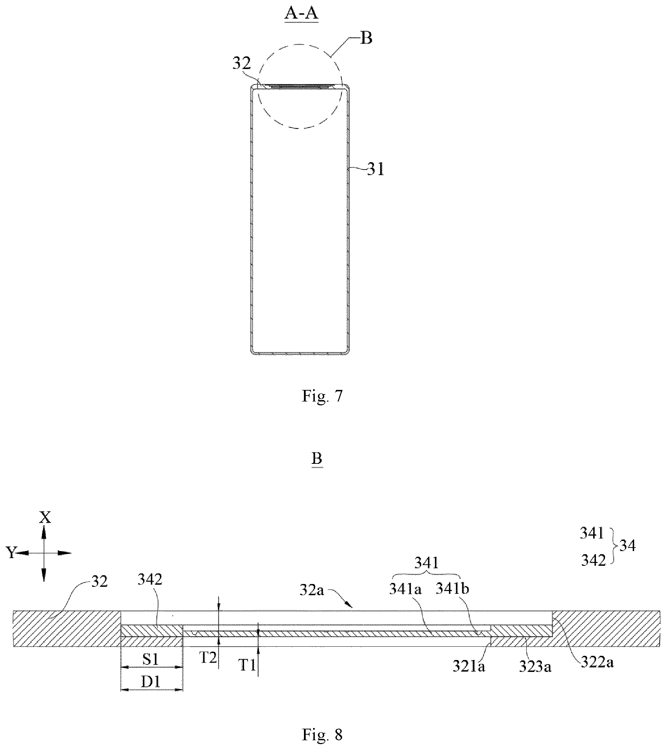

Fig. 6 shows a front view of the battery cell 30 according to an embodiment of the present application, Fig. 7 shows a structural schematic cross-sectional view of the battery cell omitting an electrode assembly in line A-A of Fig. 6; and Fig. 8 shows a partial enlarged view at part B of the Fig. 7.

As shown in Fig. 6 to Fig. 8, in some embodiments, the through hole 32a includes a first hole segment 321a, a second hole segment 322a and a first connecting face 323a connecting the first hole segment 321a and the second hole segment 322a. A projection area of the first hole segment 321a is smaller than a projection area of the second hole segment 322a in a thickness direction X, the first hole segment 321a is located at a side of the second hole segment 322a close to an interior of the casing 31, and an inner wall of the second hole segment 322a is configured to fit with a peripheral side face of the pressure relief mechanism 34.

Optionally, the projection area of the first hole segment 321a is smaller than the projection area of the second hole segment 322a in a thickness direction X. Whether the through hole 32a is arranged to penetrate in the thickness direction X, or the through hole 32a is arranged to be inclined relative to the thickness direction X, a radial size of the first hole segment 321a is smaller than a radial size of the second hole segment 322a.

It should be noted that the "radial" here may be a direction that passes through a geometric center of the through hole 32a and is perpendicular to an axial direction of the through hole 32a. Therefore, a circular hole, a square hole, a runway-shaped hole, an elliptical holes, a waist-shaped hole and the like all have the radial sizes.

It can be understood that the first hole segment 321a is arranged on the side of the second hole segment 322a close to the interior of the casing 31, that is, the first hole segment 321a is arranged on the side of the second hole segment 322a close to the electrode assembly 33. Since the inner wall of the second hole segment 322a is used to fit with the peripheral side face of the pressure relief mechanism 34, the pressure relief mechanism 34 is spaced apart from the electrode assembly 33 with at least the first hole segment 321a therebetween. According to the arrangement, the pressure relief mechanism 34 and the electrode assembly 33 are arranged to be spaced apart from each other, so that it can reduce the risk of the electrode assembly 33 exerting the pressure on the pressure relief mechanism 34 due to the electrode assembly 33 contacting with the pressure relief mechanism 34 to be impacted or vibrated, and it is beneficial to reducing the risk of the electrode assembly 33 affecting the normal operation of the pressure relief mechanism 34. Thus, during the operation process of the battery cell 30, the pressure relief mechanism 34 can work normally, which is beneficial to ensuring the safety performance of the battery cell 30. In addition, the pressure relief mechanism 34 can be connected to the first connecting face 323a, the first hole segment 321a can be set to have a certain thickness, so that the first wall 32 can provide sufficient support for the pressure relief mechanism 34, and the working reliability of the pressure relief mechanism 34 can be further improved.

Optionally, the size of the first hole segment 321a in the thickness direction X is not limited, and the purpose of spacing the electrode assembly 33 from the pressure relief mechanism 34 can be achieved.

Although the battery cell 30 provided by the above embodiments can improve the safety performance of the battery cell 30 to a certain extent, it is still unsatisfactory. For this reason, the inventors conducted further research and found that when the battery cell 30 is in operation, the internal electrode assembly 33 has the risk of contacting the pressure relief mechanism 34 and affecting the actuating pressure of the pressure relief mechanism 34. Thus, the working safety of the battery cell 30 will still be affected.

In some embodiments, in the thickness direction X, the size T1 of the first hole segment 321a satisfies: T1≥0.3mm.

Optionally, T1 may be 0.3mm, 0.5mm, 0.6mm, 0.8mm or the like.

By setting T1≥0.3mm, that is, setting the minimum distance between the pressure relief mechanism 34 and the electrode assembly 33 to be 0.3mm, it is thus beneficial to ensuring the sufficient distance between the pressure relief mechanism 34 and the electrode assembly 33. Therefore, even if the first wall 32 is deformed, the pressure relief mechanism 34 and electrode assembly 33 can still be spaced apart from each other, so that it can reduce the risk of the electrode assembly 33 exerting the pressure on the pressure relief mechanism 34 due to the electrode assembly 33 contacting with the pressure relief mechanism 34 when the electrode assembly 33 expands or is impacted and vibrated.

In some embodiments, in the thickness direction, the size of the first hole segment 321a is T1, and the size of the second hole segment 322a is T2, and T1+T2≥0.5mm.

Specifically, in order for the first hole segment 321a to have the function of isolating the pressure relief mechanism 34 from the electrode assembly 33, and due to the process restriction, for example, when the first hole segment 321a and the second hole segment 322a are formed by stamping or other processes, if the size of the first hole segment 321a in the thickness direction X is small, it cannot be guaranteed that the deformation of the first hole segment 321a meets the tolerance requirements, and thus, the minimum size T1 of the first hole segment 321a is 0.2mm. In order to ensure that the pressure relief mechanism 34 can be opened normally under a certain pressure and to ensure an opening shape of the relevant structures (such as a notch) of the pressure relief mechanism 34, the minimum size of the pressure relief mechanism 34 in the thickness direction X is 0.3mm. Thus, in order to allow the pressure relief mechanism 34 to be completely accommodated in the second hole segment 322a, the minimum size T2 of the second hole segment 322a is 0.3 mm.

Therefore, by setting T1+T2 ≥ 0.5mm, it is conducive to achieving normal processing of the first hole segment 321a, and is conducive to achieving the pressure relief mechanism 34 completely accommodated in the second hole segment 322a, so as to reduce the risk of damage of the pressure relief mechanism 34 caused by the external parts.

Optionally, the maximum value of T1+T2 is not limited, as long as the impact of the relevant parts on the normal operation of the pressure relief mechanism 34 is reduced on the basis of meeting the relevant processing.

In some embodiments, T1+T2≤3mm.

Optionally, T1+T2 can be 0.3mm, 0.5mm, 1mm, 2mm, 3mm or the like.

According to the arrangement, on the basis of ensuring that each of the first hole segment 321a and the second hole segment 322a has the sufficient size, it is beneficial to reducing the thickness of the first wall 32 as much as possible, so as to achieve the lightweight of the battery cell 30 and improve the volume energy density of the battery cell 30.

In some embodiments, the pressure relief mechanism 34 includes a body 341 and a connecting part 342, the connecting part 342 is arranged around the body 341 and abuts against the first connecting face 323a. The body 341 includes a basal region 341a and a weak region 341b, and an burst stress of the weak region 341b is smaller than an burst stress of the basal region 341a.

Specifically, the connecting part 342 is used to achieve the connection between the pressure relief mechanism 34 and the first connecting face 323a, in order to improve the connection strength between the pressure relief mechanism 34 and the first wall 32. Optionally, the connecting part 342 can be connected to the first connecting face 323a by means of bonding, welding, clamping or the like.

The connecting part 342 is arranged around the body 341, a circumference of the pressure relief mechanism 34 is connected to the first connecting face 323a, so that it is conducive to ensuring the connection strength between the pressure relief mechanism 34 and the first connecting face 323a.

Optionally, the weak region 341b may be arranged in a circular shape, or the weak region 341b may be arranged as a portion of the circular shape.

The rupture stress of the weak region 341b is smaller than the rupture stress of the basal region 341a, and then the maximum stress that weak region 341b can withstand is smaller than the maximum stress of the basal region 341a, which stress can be compressive stress, shear stress, or tensile stress, etc. Thus, as the gas inside battery cell 30 accumulates, the pressure of the gas inside battery cell 30 on the pressure relief mechanism 34 gradually increases. When the pressure of the gas reaches the pressure threshold of the pressure relief mechanism 34, the weak region 341b ruptures firstly to achieve the pressure relief in the battery cell 30.

Optionally, in order to achieve a rupture stress of weak region 341b lower than a rupture stress of basal region 341a, the materials of weak region 341b and basal region 341a may be the same, but the size of weak region 341b in the thickness direction X is smaller than the size of basal region 341a in the thickness direction X, that is, a notch can be formed at a portion of the pressure relief mechanism 34 corresponding to the weak region 341b, and the weak region 341b is provided with an appropriate thickness according to the specific pressure threshold of the pressure relief mechanism 34 to ensure the timely rupture of the weak region 341b when the internal pressure of the battery cell 30 reaches the threshold. Alternatively, the materials of weak region 341b and basal region 341a are different, and the structural strength of the material of the weak region 341b is lower than the structural strength of the material of the basal region 341a. Still alternatively, both the materials and the sizes of the weak region 341b and the substrate region 341a in the thickness direction X are different. Specifically, it can be set according to the actual needs, as long as the rupture stress of the weak region 341b is lower than the rupture stress of the basal region 341a.

It can be understood that the rupture stress of the weak region 341b is lower than he rupture stress of the basal region 341a, so that the specific value of the rupture stress of the weak region 341b can be set as needed to ensure that the weak region 341b opens or ruptures firstly when the internal pressure of the battery cell 30 reaches the threshold, in order to discharge the gas in the battery cell 30 in time. In addition, according to setting the specific shape of the weak region 341b, the shape of a gas-exhausting channel during the pressure relief mechanism 34 opening can be set, so as to achieve the purpose of discharging gas in the battery cell 30 quickly, which is conducive to further improving the working safety of the battery cell 30.

In some embodiments, a projection of the weak region 341b in the thickness direction X is located within the first hole segment 321a, and the weak region 341b is spaced apart from the inner wall of the second hole segment 322a in a direction perpendicular to the thickness direction X.

The weak region 341b is located in the first hole segment 321a, so that the gas pressure in the battery cell 30 can affect the weak region 341b, thereby causing the weak region 341b to rupture or burst under the pressure. The weak region 341b is spaced apart from the inner wall of the second hole segment 322a, so that it is beneficial to reducing the negative impact of the inner wall of the second hole segment 322a on the normal rupture of the weak region 341b, reducing the risk of the weak region 341b not being able to rupture or burst normally, or reducing the risk of difficulty of discharge of the gas in the battery cell 30 due to the impact of the inner wall of the second hole segment 322a on the shape of the weak region 341b after rupture.

In some embodiments, in a first direction Y, a size of the connecting part 342 denoted as S1 and a width of the first connecting face 323a denoted as D1 satisfy S1≥D1, in which the first direction Y is a direction passing through the geometric center of the pressure relief mechanism 34 and perpendicular to the thickness direction X.

By setting S1 ≥D1, that is, setting a connecting region between the pressure relief mechanism 34 and the first connecting face 323a within a size range of the first connecting face 323a, instead of inside the second hole segment 322a, it is thus beneficial to reducing the risk of adverse effects of the connecting part 342 on the normal rupture or burst of the pressure relief mechanism 34, further ensuring that the pressure relief mechanism 34 can be activated and released normally, and improving the working safety of the battery cell 30.

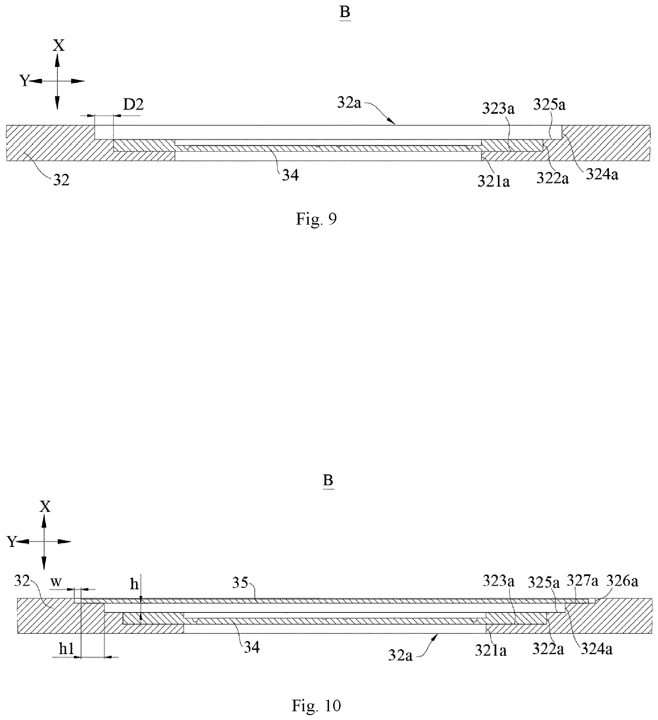

Fig. 9 shows another partial enlarged view at part B of the Fig. 7.

As shown in Fig. 6, Fig. 7 and Fig. 9, in some embodiments, the through hole 32a further includes a third hole segment 324a and a second connecting face 325a connecting the third hole segment 324a with the second hole segment 322a. In the thickness direction X, a projection area of the third hole segment 324a is larger than a projection area of the second hole segment 322a. In the first direction Y, a width D2 of the second connecting face 325a satisfies: D2≥0.5mm, and the first direction Y is a direction passing through the geometric center of the pressure relief mechanism 34 and perpendicular to the thickness direction X.

Specifically, the third hole segment 324a is located on a side of the second hole segment 322a away from the first hole segment 321a. In the thickness direction X, a projection area of the third hole segment 324a is larger than a projection area of the second hole segment 322a, and a radial size of the third hole segment 324a is larger than a radial size of the second hole segment 322a. In the case that the axial direction of the through hole 32a is parallel to the thickness direction X, an orthographic projection of the second hole segment 322a in the thickness direction X can be completely located within an orthographic projection of the third hole segment 324a.

It can be understood that during the welding process of the pressure relief mechanism 34 and the first wall 32, the minimum size of the welding mark is 0.3mm. Considering the positioning error being 0.2mm, the width D2 of the third hole segment 324a satisfies: D2≥0.5mm. Thus, a sufficient space is reserved for the welding mark of the pressure relief mechanism 34 and the first wall 32 after welding, which is conducive to ensuring the normal welding operation of the pressure relief mechanism 34.

It can be understood that the size of D2 can be reasonably set according to needs, and on the premise that the normal welding requirements of the pressure relief mechanism 34 and the first wall 32 can be met, the size of the through hole 32a can be set suitably size, which is not limited here

In some optional embodiments, D2≤1.2mm.

Optionally, D2 may be 0.5mm, 0.6mm, 0.8mm, 1mm, 1.2mm or the like.

Thus, on the premise of ensuring the normal welding process of the pressure relief mechanism 34, the width of the second connecting face 325a in the first direction Y can be reduced as small as possible, thereby reducing the space of the first wall 32 occupied by the pressure relief mechanism 34, so that it is beneficial to reducing the size of the first wall 32 and increasing the volume energy density of the battery cell 30.

Fig. 10 shows another partial enlarged view at part B of the Fig. 7.

As shown in Fig. 6, Fig. 7 and Fig. 10, in some embodiments, the battery cell 30 further includes a protective member 35, the protective member 35 is connected to the first wall 32 and arranged at a side of the pressure relief mechanism 34 close to an exterior of the casing 31, and in the thickness direction, the minimum distance h between the protective member 35 and the pressure relief mechanism 34 satisfies: h≥0.2mm.

Optionally, the protective member 35 can be in the shape of a film and include materials such as PET (Polyethylene terephthalate). The protective member 35 can be connected to an outer surface of a side of the first wall 32 away from the electrode assembly 33, or the protective member 35 can be arranged in the through hole 32a and cover the pressure relief mechanism 34.

Optionally, the minimum distance h between the protective member 35 and the pressure relief mechanism 34 may be 0.2mm, 0.3mm, 0.5mm or the like.

By arranging the protective member 35, the pressure relief mechanism 34 can be protected to reduce the scratch and other injuries of the pressure relief mechanism 34 caused by the foreign objects outside the battery cell 30. In addition, a cavity among the hole wall of the protective member 35, the through hole 32a and the pressure relief mechanism 34 is formed, so that it is beneficial to achieving the actuation of the pressure relief mechanism 34 when the pressure in the battery cell 30 reaches the threshold and reducing the risk of adverse effects of protective member 35 on the normal actuation of the pressure relief mechanism 34.

Therefore, the minimum distance h between the protective member 35 and the pressure relief mechanism 34 satisfies the above relationship, so that it is conducive to the normal actuation of the pressure relief mechanism 34 when the internal pressure of the battery cell 30 reaches the threshold, reducing the risk of adverse effects of protective member 35 on the normal actuation of the pressure relief mechanism 34 which may lead to the failure of the pressure relief mechanism 34 to actuate normally.

In some embodiments, the through hole 32a includes a third hole segment 324a, a fourth hole segment 326a and a third connecting face 327a connecting the third hole segment 324a and the fourth hole segment 326a. The third hole segment 324a is located between the second hole segment 322a and the fourth hole segment 326a. In the thickness direction X, a projection area of the third hole segment 324a is smaller than a projection area of the fourth hole segment 326a. The protective member 35 is connected to the third connecting face 327a. In the thickness direction X, the maximum size of the protective member 35 is smaller than or equal to a size of the fourth hole segment 326a.

The projection area of the third hole segment 324a is smaller than the projection area of the fourth hole segment 326a, so that in the thickness direction X, an orthographic projection of the third hole segment 324a is completely located within an orthographic projection of the fourth hole segment 326a in the case that the axial direction of the through hole 32a is parallel to the thickness direction X, that is, a radial size of the third hole segment 324a is smaller than a radial size of the fourth hole segment 326a.

The protective member 35 can be connected to the third connecting face 327a by bonding, clamping or hot melt, and the third connecting face 327a provides a certain support to the protective member 35.

In the thickness direction X, the maximum size of the protective member 35 is less than or equal to the size of the fourth hole segment 326a, and the protective member 35 is completely located within the fourth hole segment 326a. Thus, the risk of the external member scratching the protective member 35 to cause the protective member 35 to fall off can be reduced, so that it is beneficial to improving the stability of the connection between the protective member 35 and the first wall 32.

In some embodiments, the protective member 35 is bonded to the third connecting face 327a.

The bonding connection can ensure the connection strength between the protective member 35 and the third connecting face 327a, so that during the normal operation of the battery cell 30, the protective member 35 has a protective effect on the pressure relief mechanism 34. In addition, when the pressure relief mechanism 34 is activated, the actuating force can damage the bonding connection between the protective member 35 and the third connecting face 327a, so that the battery cell 30 can release the pressure normally.

In some embodiments, in a direction perpendicular to the thickness direction X, a distance h1 between an edge of the protective member 35 and an inner wall of the third hole segment 324a satisfies: h1 ≥0.5mm.

Optionally, h1 may be 0.5mm, 0.8mm, 1mm, 1.2mm, 1.5mm, 2mm or the like.

It can be understood that the distance between the edge of the protective member 35 and the inner wall of the third hole segment 324a can be equal to a bonding connection width between the protective member 35 and the third connecting face 327a. Therefore, by defining h1 ≥0.5mm, that is, the bonding connection width between the protective member 35 and the third connecting face 327a satisfies the above relationship, so that it is beneficial to improving the connection reliability between the protective member 35 and the third connecting face 327a.

In some embodiments, in the first direction Y, a distance w between an outer edge of the protective member 35 and an inner wall of the fourth hole segment 326a satisfies: 0.2mm ≤w≤3mm, and the first direction Y is a distance passing through the geometric center of the pressure relief mechanism 34 and perpendicular to the thickness direction X.

Optionally, w may be 0.2mm, 0.5mm, 0.6mm, 0.8mm, 1mm, 1.2mm, 1.5mm, 1.8mm, 2mm, 2.5mm, 3mm or the like.

By defining 0.2mm≤w, a positioning tolerance being 0.2mm can be reserved for the positioning of the protective member 35 in the fourth hole segment 326a, so that the risk of the interference between the protective member 35 and the first wall 32 can be reduced. By defining w≤3mm, the risk of the interference between the protective member 35 and the first wall 32 can be reduced, and it is beneficial to reducing the space of the first wall 32 occupied by the fourth hole segment 326a in the first direction Y, thereby facilitating integrating other parts on the first wall 32, or ensuring a cooling area of a cooling member of the battery 10 on the first wall 32 of the battery cell 30 after the battery cells 30 are connected to form the battery 10.

In some embodiments, the casing 31 includes a casing body 311 and an end cover 312, the casing body 311 is provided with an opening 311a, and the end cover 312 is used to cover the opening 311a. The pressure relief mechanism 34 is arranged on the casing body 311, or the pressure relief mechanism 34 is arranged on the end cover 312.

It can be understood that the pressure relief mechanism 34 is arranged on the end cover 312, or the pressure relief mechanism is arranged on the casing body 311, both of which can achieve the discharge of gas in the battery cell 30. The specific position of the pressure relief mechanism 34 can be flexibly arranged according to actual needs, so as to reserve a sufficient space for the integration of other related structures in the battery cell 30.

In some embodiments, the pressure relief mechanism is arranged on the casing body 311, and the casing body 311 includes the first wall 32, a second wall 3111 and two third walls 3112. The first wall 32 and the second wall 3111 are opposite to each other, and the two third walls 3112 are opposite to each other. Each of the third walls 3112 is connected to the first wall 32 and the second wall 3111.

Optionally, the structures or shapes of the first wall 32 and the second wall 3111 may be the same, or the second wall 3111 and the first wall 32 may have different structures and shapes respectively.

The third walls 3112 are connected the first wall 32 and the second wall 3111, and the first wall 32, the second wall 3111 and the third walls 3112 are jointly enclosed on the peripheral side of the electrode assembly 33. The pressure relief mechanism 34 can be arranged at any position on the first wall 32, so that on the premise of ensuring the normal operation of the pressure relief mechanism 34, the position of the pressure relief mechanism 34 can be reasonably set according to the spatial layout of various parts in the battery cell 30.

In some embodiments, a surface area of the first wall 32 is smaller than a surface area of each of the third walls 3112.

That is, the pressure relief mechanism 34 is arranged on the wall of the casing body 311 with a smaller area. In this way, during the process of forming the battery 10 or battery module 20 from the battery cell 30, a side surface of the battery cell 30 with the larger area, such as a surface corresponding to the third wall 3112, can be attached to the third wall 3112, so as to improve the space utilization rate of the interior of the battery 10 and the energy density of the battery 10.

In some embodiments, the casing body 311 is provided with two openings 311a opposite to each other, two end covers 312 are provided, and the two end covers 312 cover the two openings 311a respectively.

It can be understood that the casing body 311 is provided with two openings 311a, and two end covers 312 cover the two openings 311a respectively. During the process of inserting electrode assembly 33 into the casing body, the electrode assembly 33 is placed into the casing body 311 firstly, and then the two end covers 312 cover the openings 311a respectively, so that it can make the assembly process of battery cell 30 more convenient and efficient.

The battery 10 provided by the embodiments of the present application includes the battery cell 30 according to any one of the embodiments as described above.

The battery 10 provided by the embodiments of the present application has the same technical effect due to using the battery cell 30 according to any one of the embodiments as described above, which will not be repeated here.

An electricity-consuming apparatus provided by the embodiments of the present application includes the battery 10 according to embodiments as described above, and the battery 10 is used to supply an electric power.

The electricity-consuming apparatus provided by the embodiments of the present application has the same technical effect due to using the battery 10 according to the embodiments as described above, which will not be repeated here.

Although the present application has been described with reference to the preferred embodiments, various modifications may be made thereto and equivalents may be substituted for parts thereof without departing from the scope of the present application. In particular, as long as there are no structural conflicts, the technical features mentioned in each of the embodiments can be combined in any way. The present application is not limited to the specific embodiments disclosed herein, but includes all technical solutions falling within the scope of the claims.

## Claims

1. A battery cell, comprising
a casing, comprising a first wall provided with a through hole; and
a pressure relief mechanism, arranged on the first wall, wherein at least a portion of the pressure relief mechanism is located in the through hole.

2. The battery cell according to claim 1, wherein the pressure relief mechanism is completely accommodated in the through hole.

3. The battery cell according to claim 1 or 2, wherein the through hole comprises a first hole segment, a second hole segment and a first connecting face connecting the first hole segment with the second hole segment, a projection area of the first hole segment is smaller than a projection area of the second hole segment in a thickness direction of the first wall, the first hole segment is located at a side of the second hole segment close to an interior of the casing, and an inner wall of the second hole segment is configured to fit with a peripheral side face of the pressure relief mechanism.

4. The battery cell according to claim 3, wherein in the thickness direction, a size T1 of the first hole segment satisfies: T1≥0.3mm.

5. The battery cell according to claim 3 or 4, wherein in the thickness direction, a size of the first hole segment is T1, a size of the second hole segment is T2, and T1+T2≥0.5mm.

6. The battery cell according to claim 5, wherein T1+T2≤3mm.

7. The battery cell according to any one of claims 3 to 6, wherein the pressure relief mechanism comprises a body and a connecting part, the connecting part is arranged around the body and abuts against the first connecting face, the body comprises a basal region and a weak region, and a rupture stress of the weak region is smaller than a rupture stress of the basal region.

8. The battery cell according to claim 7, wherein a projection of the weak region in the thickness direction is located within the first hole segment, and the weak region is spaced apart from an inner wall of the second hole segment in a direction perpendicular to the thickness direction.

9. The battery cell according to claim 7 or 8, wherein in a first direction, a size of the connecting part is S1, a width of the first connecting face is D 1, with S1 ≥D1, in which the first direction is a direction passing through a geometric center of the pressure relief mechanism and perpendicular to the thickness direction.

10. The battery cell according to any one of claims 3 to 9, wherein the through hole further comprises a third hole segment and a second connecting face connecting the third hole segment with the second hole segment; in the thickness direction, a projection area of the third hole segment is larger than a projection area of the second hole segment; in a first direction, a width D2 of the second connecting face satisfies: D2≥0.5mm, in which the first direction is a direction passing through a geometric center of the pressure relief mechanism and perpendicular to the thickness direction.

11. The battery cell according to claim 10, wherein D2≤ 1.2mm.

12. The battery cell according to any one of claims 3 to 10, wherein the battery cell further comprises a protective member, the protective member is connected to the first wall and arranged at a side of the pressure relief mechanism close to an exterior of the casing, and in the thickness direction, a minimum distance h between the protective member and the pressure relief mechanism satisfies: h≥0.2mm.

13. The battery cell according to claim 12, wherein the through hole comprises a third hole segment, a fourth hole segment and a third connecting face connecting the third hole segment and the fourth hole segment, the third hole segment is arranged between the second hole segment and the fourth hole segment, and a projection area of the third hole segment is smaller than a projection area of the fourth hole segment in the thickness direction;
the protective member is connected to the third connecting face, and the maximum size of the protective member is smaller than or equal to a size of the fourth hole segment in the thickness direction.

14. The battery cell according to claim 13, wherein in a direction perpendicular to the thickness direction, a distance h1 between an outer edge of the protective member and an inner wall of the third hole segment satisfies: h1 ≥0.5mm.

15. The battery cell according to claim 13 or 14, wherein in the first direction, a distance w between the outer edge of the protective member and the inner wall of the fourth hole segment satisfies: 0.2mm≤w≤3mm, and the first direction is a direction passing through a geometric center of the pressure relief mechanism and perpendicular to the thickness direction.

16. The battery cell according to any one of claims 1 to 15, wherein the casing comprises a casing body and an end cover, the casing body is provided with an opening, and the end cover is configured to cover the opening;
the pressure relief mechanism is arranged on the casing body, or the pressure relief mechanism is arranged on the end cover.

17. The battery cell according to claim 16, wherein the pressure relief mechanism is arranged on the casing body, the casing body comprises the first wall, a second wall and two third walls, the first wall and the second wall are arranged opposite to each other, the two third walls are arranged opposite to each other, and each of the third walls connects the first wall and the second wall.

18. The battery cell according to claim 17, wherein a surface area of the first wall is smaller than a surface area of the third wall.

19. The battery cell according to any one of claims 16 to 18, wherein the casing body is provided with two openings opposite to each other, two end covers are provided, and the two end covers cover the two openings respectively.

20. A battery, comprising the battery cell according to any one of claims 1 to 19.

21. An electricity-consuming apparatus, comprising the battery according to claim 20, the battery being configured to supply electric power.
